# EUROPEAN PATENT SPECIFICATION

(11) **EP 2 778 645 B1**
(45) Date of publication and mention of the grant of the patent: **22.06.2016**
(21) Application number: 14158803.8
(22) Date of filing: 11.03.2014
(51) Int. Cl.: G02B 23/24, G06T 7/00, G01M 5/00

(54) **Turbomachine component monitoring system and method**
System und Verfahren zur Überwachung einer Turbomaschinenkomponente
Système de surveillance d'un composant de turbomachine et procédé

(30) Priority: 14.03.2013 US 201313829052
(43) Date of publication of application: 17.09.2014
(73) Proprietor: General Electric Company, Schenectady, NY 12345 (US)
(72) Inventor: Ward Jr., John David, Greenville, SC South Carolina 29615 (US); Batzinger, Thomas James, Schenectady, NY New York 12345 (US); Janawitz, Jamison William, Atlanta, GA Georgia 30339 (US); Thompson, Christopher Edward, Greenville, SC South Carolina 29615 (US)
(74) Representative: Cleary, Fidelma

(56) References cited:
- WO-A2-2011/034910
- GB-A- 2 474 834
- JP-A- H01 321 584
- US-A1- 2006 289 652

## Description

The subject matter disclosed herein relates to power systems. More particularly, the subject matter relates to monitoring components within turbomachine systems.

Conventional turbomachines (also referred to as turbines), such as steam turbines (steam turbomachines) or gas turbines (gas turbomachines), generally include static nozzle assemblies that direct the flow of working fluid (e.g., steam or gas) into rotating buckets that are connected to a rotor. During operation of these turbomachines, the rotating buckets and/or static nozzles are subject to intense temperature and pressure conditions which can degrade the structural integrity of the buckets, nozzles and/or other components inside the turbomachine.

These degraded components may cause the turbomachine to run less efficiently, may create safety concerns, and may eventually require repair. Monitoring these components can be helpful to anticipate degradation and repair. However, due to the fact that these components (e.g., buckets and/or blades) are sealed within the turbomachine during operation, it can be difficult to monitor their condition.

US2006/289652 relates to a binary code symbol for non-linear strain measurement. More specifically, the invention relates to a binary code symbol for non-linear strain measurement, which can encode a range of data values using an error-correcting code (ECC) technique, and a strain analysis and measurement method employing the binary code symbol. The new binary code has a unique geometry and attributes.

GB2474834 relates to a method of inspecting and/or repairing a component and a device for inspecting and/or repairing a component, such as a component in a gas turbine engine. This is achieved by inserting a boroscope and a conduit through an aperture in a casing, supplying a dye through the conduit whereby the dye penetrates into any defects on the component surface and light is shone on the dyed areas to see the defects.

JPH01321585 relates to a system for identifying the misreading to a host device type by comparing the time interval of the bar code input signal with a fixed time. WO2011/034910 relates to a remote displacement sensor, such as an optical strain gauge, which uses an optical amplifier implemented by patterns, such as, moire patterns, to calculate changes in position or gauge length. The image of the optical strain gauge is captured by a camera or other optical device and the resulting image is processed by a Fast Fourier Transform or similar algorithm to determine the phase change, thereby calculating the change in gauge length and therefore the resulting strain.

The invention discloses a turbomachine component monitoring system according to claim 1 and a respective method according to claim 10.

These and other features of this invention will be more readily understood from the following detailed description of the various aspects of the invention taken in conjunction with the accompanying drawings that depict various embodiments of the invention, in which:
FIG. 1 shows a schematic depiction of a system according to various embodiments of the invention.
FIG. 2 shows a schematic three-dimensional depiction of a turbomachine blade, including a close-up view of a symbolic data array on a surface of the turbomachine blade, according to various embodiments of the invention.
FIG. 3 shows a flow diagram illustrating processes in a method according to various embodiments of the invention.
FIG. 4 shows an illustrative environment including a computing device according to various embodiments of the invention.

It is noted that the drawings of the invention are not necessarily to scale. The drawings are intended to depict only typical aspects of the invention, and therefore should not be considered as limiting the scope of the invention. In the drawings, like numbering represents like elements between the drawings.

As noted, the subject matter disclosed herein relates to power systems. More particularly, the subject matter relates to monitoring components in turbomachine systems.

As described herein, conventional turbomachines (also referred to as turbines), such as steam turbines (steam turbomachines) or gas turbines (gas turbomachines), generally include static nozzle assemblies that direct the flow of working fluid (e.g., steam or gas) into rotating buckets that are connected to a rotor. During operation of these turbomachines, the rotating buckets and/or static nozzles are subject to intense temperature and pressure conditions which can degrade the structural integrity of the buckets, blades and/or other components inside the turbomachine.

These degraded components may cause the turbomachine to run less efficiently, may create safety concerns, and may eventually require repair. Monitoring these components can be helpful to anticipate degradation and repair. However, due to the fact that these components (e.g., buckets and/or blades) are sealed within the turbomachine during operation, it can be difficult to monitor their condition.

In contrast to conventional approaches, various embodiments of the invention utilize remote visualization via endoscopy to monitor and/or evaluate the structural health and integrity of a component installed within a turbomachine. The component is generally inaccessible for conventional methods of monitoring and evaluating components in a turbomachine. In particular embodiments of the invention, a system measures strain, e.g., creep strain, along the surface of a component such as a blade/nozzle.

In various particular embodiments of the invention, local creep strain data about a component is obtained through endoscopic evaluation of the component at rest within a turbomachine.

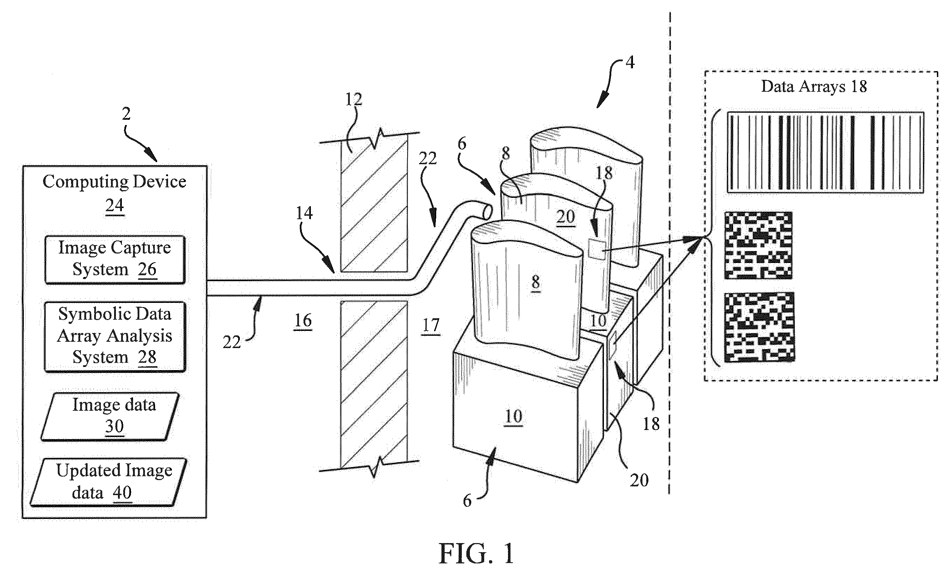

Turning to FIG. 1, a schematic depiction of a system 2 interacting with a turbomachine 4 (e.g., a gas turbine or a steam turbine) and one or more turbomachine components 6 is shown according to various embodiments of the invention. The turbomachine 4 is illustrated in a cut-away view, where only some components of the turbomachine 4 are shown in order to enhance understanding of the various aspects of the invention. The turbomachine 4 can include at least one component 6, which can include a turbomachine blade (also referred to as a bucket) 8, a turbomachine blade dovetail 10 (also referred to as the base of the blade 8, as well as other components well known in the art. Blades 8 and dovetails 10 are used merely for illustrative purposes to enhance understanding of the various aspects of the invention. It is understood that the principles described herein can be applied to any component conventionally found within a turbomachine (e.g., gas turbine or steam turbine), such as flanges, rotating shafts, seals, ducts, etc.

With continuing reference to FIG. 1, the turbomachine 4 includes a casing 12 (also referred to as a casing wall), which encases the components 6 and obstructs visual access to the components 6 within the casing 12. In various embodiments, the casing 12 includes at least one opening 14 (or, aperture) which extends through the casing 12 from an external location 16 to an internal location 17 within the casing 12. Within the casing 12, a symbolic data array 18 is located on one or more of the components 6 (e.g., blades 8 and/or dovetails 10). The symbolic data array(s) 18 can be adhered to a surface 20 of the component(s) via conventional adhesive techniques. The symbolic data array 18 can include at least one of: a one-dimensional bar code, a two-dimensional symbol or a three-dimensional compressed symbol. For example, the symbolic data array 18 can take the form of any symbolic data array known in the art, e.g., as shown and/or described in US Pat. Nos.: 8,322,627; 8,191,784; 7,878,415; 7,621,459; 7,533,818; and 7,477,995, each of which is assigned to Direct Measurements Incorporated of Atlanta, Georgia (US).

The system 2 is configured to monitor at least one of the components 6 within the turbomachine 4. The system 2 can include a borescope probe 22 that is sized to pass through the opening 14 in the turbomachine 4 (casing 12). The borescope probe 22 can include any conventional borescope equipment, e.g., a semi-rigid or flexible tube, with an inspection lens (e.g., camera) at its distal end, an objective lens (e.g., mirror) at its base, and a relay optical system between the two ends. The relay optical system can be surrounded by optical fibers which can aid in illuminating the distal end for enhanced clarity. The borescope probe 22 can be used to detect one or more of the symbolic data arrays 18 located on the component(s) 6.

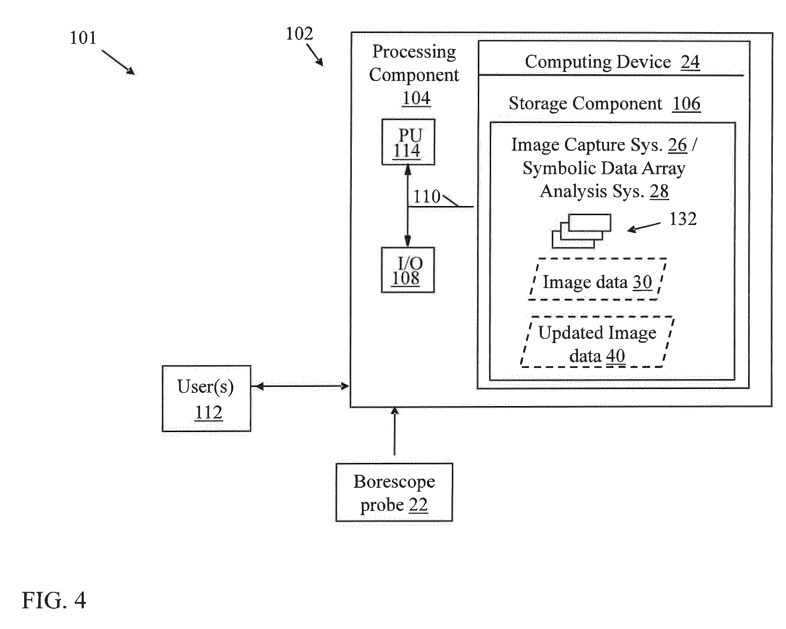

The system 2 can further include at least one computing device 24 operably coupled (e.g., via hard-wired or wireless means) to the borescope probe 22. In various embodiments, the computing device 24 can include an image capture system 26 and a symbolic data array analysis program (also referred to as an image analysis system) 28, which can perform a variety of functions described herein. For clarity of illustration, these functions are described herein as being performed by the computing device 24 which holds the image capture system 26 and the image analysis system 28. In any case, the computing device 24 is configured to obtain image data 30 (FIG. 4) about the symbolic data array 18 from the borescope probe 22. This can include using the image capture system 26 to extract data representative of a still-image of the symbolic data array 18, and converting that extracted data into a format that can be executed by the symbolic data array analysis program 28. The computing device 24 can also evaluate the image data 30 to determine whether that image data 30 is compatible with the symbolic data array analysis program (or simply, analysis program) 28. Compatibility, in this sense, means that the image data 30 captures the optical details of the symbolic data array 18 sufficiently for the analysis program 28 to determine one or more desired characteristics of the symbolic data array 18. In some cases, evaluating the image data 30 can include attempting to run the analysis program 28 using the image data 30, and receiving a response from the analysis program 28 as to whether the analysis program 28 could process the image data 30. In other cases, the computing device 24 can pre-screen the image data 30, e.g., using a filter, to determine whether the image data 30 is compatible with the analysis program 28. In yet other cases, a human user (e.g., user 12, FIG. 4) can pre-screen the image data 30 by looking at the image captured by the borescope probe 22 on a user interface (e.g., a graphical user interface, GUI) coupled to the computing device 24.

In response to determining that the image data 30 is compatible with the analysis program 28, the computing device 24 can analyze the image data 30 using the analysis program 28 (e.g., by running the program with the image data 30) to determine a characteristic of the symbolic data array 18. In some cases, the characteristic of the symbolic data array 18 can include an identification of the symbolic data array 18 (e.g., an identification number, symbol and/or letter, etc.). In other cases, the characteristic of the symbolic data array 18 can include information about the underlying component(s) 6, e.g., an indication of strain, stress, fatigue, material creep, etc. in the component 6. In some cases, the symbolic data array 18 can include one or more of a symbolic strain rosette, a symbolic strain gauge, a Moire fringe pattern or another similarly optical-based strain indicator. In these cases, the characteristic of the symbolic data array 18 can indicate strain in the underlying surface 20 of the component(s) 6 to which it is adhered.

In response to determining that the image data 30 is not compatible with the analysis program 28, the computing device 24 can initiate a message indicating that the image data 30 is incompatible with the analysis program 28. In some cases, the message can indicate that the borescope probe 22 be repositioned in order to capture a more optically clear image of the symbolic data array 18. In this case, a user 13 (FIG. 4) may move the borescope probe 22 from its first position (where image data 30 was captured) to a second position distinct from the first position.

In some cases, the computing device 24 can obtain updated image data 40 about the symbolic data array 18 in response to determining that the image data 30 is not compatible with the analysis program 28. The updated image data 40 could be obtained after repositioning of the borescope probe 22 (from first to second position), or can be obtained while the borescope probe 22 is still in its first position. In any case, the computing device 24 can process the updated image data 40 similarly as it did with the image data 30, e.g., by evaluating the update image data 40 to determine whether the updated image data 40 is compatible with the analysis program 28; and analyzing the updated image data 40 using the analysis program 28 in response to determining the updated image data 40 is compatible with the analysis program 28. If the computing device 24 determines that the updated image data 40 is incompatible with the analysis program 28, the computing device 24 may repeat the above-noted processes (e.g., initiating a message and/or obtaining further updated image data, evaluating, and analyzing/re-obtaining, etc.) until it obtains update image data that is compatible with the analysis program 28 (and can thus provide information about one or more characteristics of the component(s)).

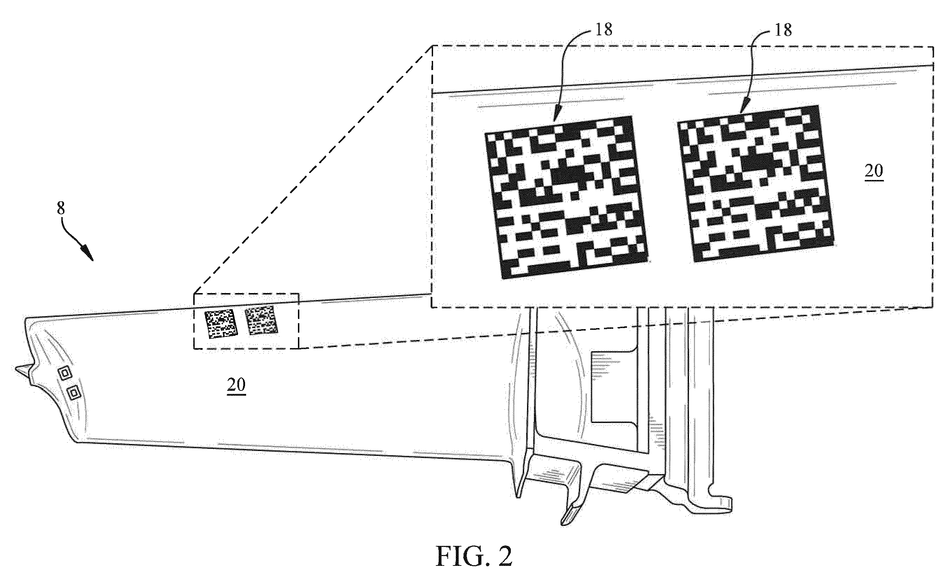

FIG. 2 shows a schematic three-dimensional depiction of a turbomachine blade 8, including a close-up view of a symbolic data array 18 on a surface 20 of the turbomachine blade 8. As shown, in some embodiments, more than one symbolic data array 18 can be located on the surface 20 of a component 6. In some cases, distinct types of symbolic data array 18 (e.g., a one-dimensional, two-dimensional, three-dimensional, strain gauge, etc.) can be placed on the same surface 20 of a component 6 to aid in indicating distinct characteristics of the component 6 at one or more locations on the surface 20.

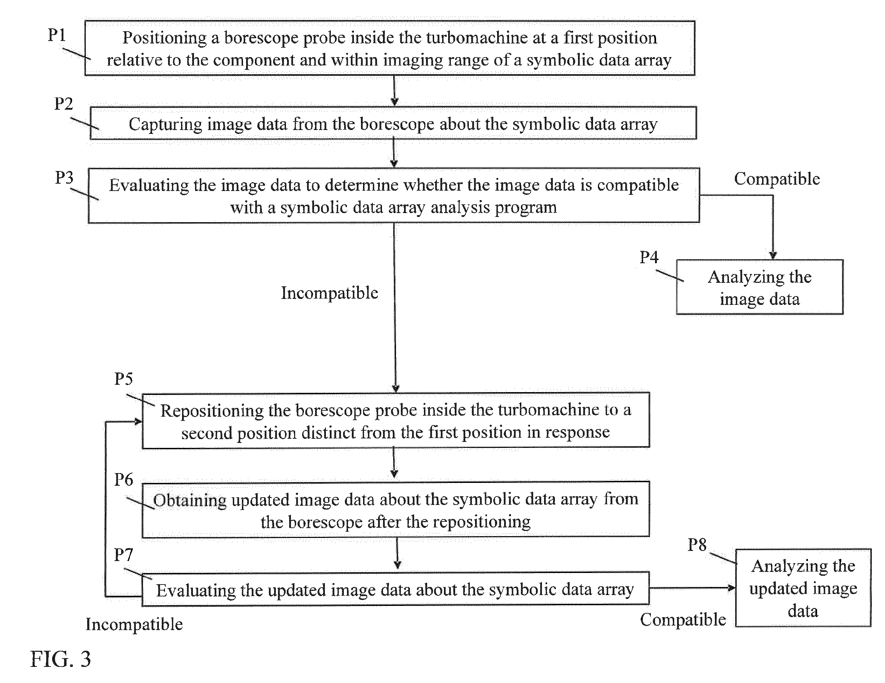

FIG. 3 shows a flow diagram illustrating a method according to various embodiments. The method can include the following processes:
Process P1: positioning a borescope probe inside the turbomachine at a first position relative to the component and within imaging range of a symbolic data array;
Process P2 (using at least one computing device coupled to the borescope probe): capturing image data from the borescope about the symbolic data array;
Process P3 (using at least one computing device coupled to the borescope probe): evaluating the image data to determine whether the image data is compatible with a symbolic data array analysis program configured to execute on the at least one computing device;
Process P4 (using at least one computing device coupled to the borescope probe): analyzing the image data using the symbolic data array analysis program in response to determining that the image data is compatible with the symbolic data array analysis program;
Process P5: repositioning the borescope probe inside the turbomachine to a second position distinct from the first position in response to determining that the image data is not compatible with the symbolic data array analysis program;
Process P6 (using at least one computing device coupled to the borescope probe): obtaining updated image data about the symbolic data array from the borescope after the repositioning;
Process P7 (using at least one computing device coupled to the borescope probe): evaluating the updated image data about the symbolic data array to determine whether the updated image data is compatible with the symbolic data array analysis program; and
Process P8 (using at least one computing device coupled to the borescope probe): analyzing the updated image data using the symbolic data array analysis program in response to determining the updated image data is compatible with the symbolic data array analysis program.

As described herein, several of the above-noted processes can be repeated until the borescope probe can obtain image data about the symbolic data array that is compatible with the analysis program (see feedback loop from process P7 to process P5 if incompatible).

FIG. 4 depicts an illustrative environment 101 for performing the turbomachine monitoring processes described herein with respect to various embodiments. To this extent, the environment 101 includes a computer system 102 that can perform one or more processes described herein in order to monitor a component within a turbomachine. In particular, the computer system 102 is shown as including the image capture system 26 and the symbolic data array analysis system 28, which makes computer system 102 operable to monitor a component within a turbomachine by performing any/all of the processes described herein and implementing any/all of the embodiments described herein.

The computer system 102 is shown including the computing device 24, which can include a processing component 104 (e.g., one or more processors), a storage component 106 (e.g., a storage hierarchy), an input/output (I/O) component 108 (e.g., one or more I/O interfaces and/or devices), and a communications pathway 110. In general, the processing component 104 executes program code, such as the image capture system 26 and/or data array analysis system 28, which is at least partially fixed in the storage component 106. While executing program code, the processing component 104 can process data, which can result in reading and/or writing transformed data from/to the storage component 106 and/or the I/O component 108 for further processing. The pathway 110 provides a communications link between each of the components in the computer system 102. The I/O component 108 can comprise one or more human I/O devices, which enable a user (e.g., a human and/or computerized user) 112 to interact with the computer system 102 and/or one or more communications devices to enable the system user 112 to communicate with the computer system 102 using any type of communications link. To this extent, the image capture system 26 and/or data array analysis system 28 can manage a set of interfaces (e.g., graphical user interface(s), application program interface, etc.) that enable human and/or system users 112 to interact with the image capture system 26 and/or data array analysis system 28. Further, the image capture system 26 and/or data array analysis system 28 can manage (e.g., store, retrieve, create, manipulate, organize, present, etc.) data, such as image data 30 and/or updated image data 40 using any solution. The image capture system 26 and/or data array analysis system 28 can additionally communicate with the borescope probe 22 via wireless and/or hardwired means.

In any event, the computer system 102 can comprise one or more general purpose computing articles of manufacture (e.g., computing devices) capable of executing program code, such as the image capture system 26 and/or data array analysis system 28, installed thereon. As used herein, it is understood that "program code" means any collection of instructions, in any language, code or notation, that cause a computing device having an information processing capability to perform a particular function either directly or after any combination of the following: (a) conversion to another language, code or notation; (b) reproduction in a different material form; and/or (c) decompression. To this extent, the image capture system 26 and/or data array analysis system 28 can be embodied as any combination of system software and/or application software. It is further understood that the image capture system 26 and/or data array analysis system 28 can be implemented in a cloud-based computing environment, where one or more processes are performed at distinct computing devices (e.g., a plurality of computing devices 24), where one or more of those distinct computing devices may contain only some of the components shown and described with respect to the computing device 24 of FIG. 4.

Further, the image capture system 26 and/or data array analysis system 28 can be implemented using a set of modules 132. In this case, a module 132 can enable the computer system 102 to perform a set of tasks used by the image capture system 26 and/or data array analysis system 28, and can be separately developed and/or implemented apart from other portions of the image capture system 26 and/or data array analysis system 28. As used herein, the term "component" means any configuration of hardware, with or without software, which implements the functionality described in conjunction therewith using any solution, while the term "module" means program code that enables the computer system 102 to implement the functionality described in conjunction therewith using any solution. When fixed in a storage component 106 of a computer system 102 that includes a processing component 104, a module is a substantial portion of a component that implements the functionality. Regardless, it is understood that two or more components, modules, and/or systems may share some/all of their respective hardware and/or software. Further, it is understood that some of the functionality discussed herein may not be implemented or additional functionality may be included as part of the computer system 102.

When the computer system 102 comprises multiple computing devices, each computing device may have only a portion of image capture system 26 and/or data array analysis system 28 fixed thereon (e.g., one or more modules 132). However, it is understood that the computer system 102 and image capture system 26 and/or data array analysis system 28 are only representative of various possible equivalent computer systems that may perform a process described herein. To this extent, in other embodiments, the functionality provided by the computer system 102 and image capture system 26 and/or data array analysis system 28 can be at least partially implemented by one or more computing devices that include any combination of general and/or specific purpose hardware with or without program code. In each embodiment, the hardware and program code, if included, can be created using standard engineering and programming techniques, respectively.

Regardless, when the computer system 102 includes multiple computing devices 24, the computing devices can communicate over any type of communications link. Further, while performing a process described herein, the computer system 102 can communicate with one or more other computer systems using any type of communications link. In either case, the communications link can comprise any combination of various types of wired and/or wireless links; comprise any combination of one or more types of networks; and/or utilize any combination of various types of transmission techniques and protocols.

The computer system 102 can obtain or provide data, such as image data 30 and/or updated image data 40 using any solution. The computer system 102 can generate image data 30 and/or updated image data 40, from one or more data stores, receive image data 30 and/or updated image data 40, from another system such as the borescope probe 22 or the user 112, send image data 30 and/or updated image data 40 to another system, etc.

While shown and described herein as a method and system for monitoring a component within a turbomachine, it is understood that aspects of the invention further provide various alternative embodiments. For example, in one embodiment, the invention provides a computer program fixed in at least one computer-readable medium, which when executed, enables a computer system to monitor a component within a turbomachine. To this extent, the computer-readable medium includes program code, such as the image capture system 26 and/or data array analysis system 28 (FIG. 4), which implements some or all of the processes and/or embodiments described herein. It is understood that the term "computer-readable medium" comprises one or more of any type of tangible medium of expression, now known or later developed, from which a copy of the program code can be perceived, reproduced, or otherwise communicated by a computing device. For example, the computer-readable medium can comprise: one or more portable storage articles of manufacture; one or more memory/storage components of a computing device; paper; etc.

In another embodiment, the invention provides a method of providing a copy of program code, such as the image capture system 26 and/or data array analysis system 28 (FIG. 4), which implements some or all of a process described herein. In this case, a computer system can process a copy of program code that implements some or all of a process described herein to generate and transmit, for reception at a second, distinct location, a set of data signals that has one or more of its characteristics set and/or changed in such a manner as to encode a copy of the program code in the set of data signals. Similarly, an embodiment of the invention provides a method of acquiring a copy of program code that implements some or all of a process described herein, which includes a computer system receiving the set of data signals described herein, and translating the set of data signals into a copy of the computer program fixed in at least one computer-readable medium. In either case, the set of data signals can be transmitted/received using any type of communications link.

The invention provides a method of monitoring a component within a turbomachine. In this case, a computer system, such as the computer system 102 (FIG. 4), can be obtained (e.g., created, maintained, made available, etc.) and one or more components for performing a process described herein can be obtained (e.g., created, purchased, used, modified, etc.) and deployed to the computer system. To this extent, the deployment can comprise one or more of: (1) installing program code on a computing device; (2) adding one or more computing and/or I/O devices to the computer system; (3) incorporating and/or modifying the computer system to enable it to perform a process described herein; etc.

In any case, the technical effect of the invention, including, e.g., the image capture system 26 and/or data array analysis system 28, is to monitor at least one component within a turbomachine.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. It is further understood that the terms "front" and "back" are not intended to be limiting and are intended to be interchangeable where appropriate.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A system comprising:
a borescope probe (22) sized to pass through an opening (14) in a turbomachine (4), the borescope probe for detecting a symbolic data array (18) on a component (6) within the turbomachine, **characterized in**
at least one computing device (24) operably coupled to the borescope probe and configured to monitor the component (6) within the turbomachine (4) by performing actions including:
obtaining image data (30) about the symbolic data array (18) located on the component within the turbomachine (4) from the borescope probe;
evaluating the image data (30) to determine whether the image data is compatible with a symbolic data array analysis program (28) configured to execute on the at least one computing device (24), and
analyzing the image data (30) using the symbolic data array analysis program (28) in response to determining that the image data is compatible with the symbolic data array analysis program;
determining a characteristic of the symbolic data array (18), which characteristic includes information about the component (6), wherein the information comprises at least one of: an indication of strain, stress, fatigue, material creep, by means of at least one of a symbolic strain rosette, a symbolic strain gauge, a Moire fringe pattern or another similarly optical-based strain indicator; and
initiating a message indicating that the image data (30) is incompatible with the symbolic data array analysis program (28) in response to determining that the image data is not compatible with the symbolic data array analysis program thereby indicting information of one or more characteristics of the component.

2. The system of claim 1, wherein the at least one computing device (24) is further configured to:
obtain updated image data (40) about the symbolic data array (18) after the initiating of the message.

3. The system of claim 2, wherein the updated image is obtained again until the updated image data is compatible with the symbolic data array analysis program.

4. The system of either of claim 2 or 3, wherein the at least one computing device (24) is further configured to:
evaluate the updated image data about the symbolic data array (18) to determine whether the updated image data is compatible with the symbolic data array analysis program;
analyze the updated image data using the symbolic data array analysis program (28) in response to determining the updated image data is compatible with the symbolic data array analysis program; and
initiate a message indicating that the updated image data is incompatible with the symbolic data array analysis program (28) in response to determining that the updated image data is not compatible with the symbolic data array analysis program thereby indicating information about one or more characteristics of the component.

5. The system of any preceding claim, wherein the image data (30) includes data obtained from the borescope (22) while the borescope is oriented at a first position relative to the symbolic data array (18), and the updated image data (40) includes data obtained from the borescope while the borescope is oriented at a second position relative to the symbolic data array, the second position being distinct from the first position.

6. The system of any of claims 4 and 5, wherein the at least one computing device (24) is further configured to obtain updated image data about the symbolic data array (18) from the borescope (22) in response to determining the image data is not compatible with the symbolic data array analysis program (28).

7. The system of any preceding claim, wherein the message indicating that the image data is incompatible with the symbolic data array analysis program further includes a message indicating that the borescope (22) be repositioned from the first position to the second position.

8. The system of any preceding claim, wherein the symbolic data array (18) includes at least one of: a one-dimensional bar code, a two-dimensional symbol or a three-dimensional compressed symbol.

9. The system of any preceding claim, wherein the component (6) within the turbomachine (4) includes at least one of a turbomachine blade (8) or a turbomachine bucket dovetail (10).

10. A method for monitoring a component (6) within a turbomachine (4), the method comprising:
positioning (P1) a borescope probe (22) inside the turbomachine at a first position relative to the component and within imaging range of a symbolic data array;
using at least one computing device coupled to the borescope probe:
capturing (P2) image data (30) from the borescope about the symbolic data array (18);
evaluating (P3) the image data to determine whether the image data is compatible with a symbolic data array analysis program configured to execute on the at least one computing device (24); and
analyzing (P4) the image data using the symbolic data array analysis program (28) in response to determining that the image data is compatible with the symbolic data array analysis program;
determining a characteristic of the symbolic data array (18), which characteristic includes information about the component (6), wherein the information comprises at least one of: an indication of strain, stress, fatigue, material creep, by means of at least one of a symbolic strain rosette, a symbolic strain gauge, a Moire fringe pattern or another similarly optical-based strain indicator;
initiating a message indicating that the image data (30) is incompatible with the symbolic data array analysis program (28) in response to determining that the image data is not compatible with the symbolic data array analysis program thereby indicting information about one or more characteristics of the component.

11. The method of claim 10, further comprising:
repositioning (P5) the borescope probe inside the turbomachine to a second position distinct from the first position in response in response to the message.

12. The method of claim 10 or claim 11, further comprising using the at least one computing device to:
obtain (P6) updated image data about the symbolic data array from the borescope after the repositioning;
evaluate (P7) the updated image data about the symbolic data array to determine whether the updated image data is compatible with the symbolic data array analysis program; and
analyze (P8) the updated image data using the symbolic data array analysis program in response to determining the updated image data is compatible with the symbolic data array analysis program.

13. The method of claim 10 to 12, wherein the turbomachine includes a casing, and wherein the positioning includes placing the borescope probe through an opening in the casing.

## Patentansprüche

1. System, das umfasst:
eine Endoskopsonde (22), die von der Größe so messen ist, dass sie durch eine Öffnung (14) in einer Turbomaschine (4) hindurchgeführt werden kann, wobei die Endoskopsonde dazu dient, eine symbolische Datenanordnung (18) auf einer Komponente (6) innerhalb der Turbomaschine zu detektieren, **gekennzeichnet durch**
mindestens eine Computervorrichtung (24), die betreibbar mit der Endoskopsonde gekoppelt und konfiguriert ist, um die Komponente (6) innerhalb der Turbomaschine (4) zu überwachen, indem Aktionen durchgeführt werden, die Folgendes enthalten:
Erhalten von Abbildungsdaten (30) über die symbolische Datenanordnung (18), die auf der Komponente innerhalb der Turbomaschine (4) angeordnet ist, von der Endoskopsonde;
Auswerten der Abbildungsdaten (30), um zu bestimmen, ob die Abbildungsdaten kompatibel mit einem Analyseprogramm (28) der symbolischen Datenanordnung sind, das konfiguriert ist, um auf der mindestens einen Computervorrichtung (24) ausgeführt zu werden, und
Analysieren der Abbildungsdaten (30) unter Verwendung des Analyseprogramms (28) der symbolischen Datenanordnung als Reaktion auf das Bestimmen, dass die Abbildungsdaten kompatibel mit dem Analyseprogramm der symbolischen Datenanordnung sind;
Bestimmen einer Charakteristik der symbolischen Datenanordnung (18), wobei die Charakteristik Informationen über die Komponente (6) enthält, wobei die Informationen mindestens eines von dem Folgenden umfassen: eine Angabe, die einen Hinweis gibt auf Spannung, Beanspruchung, Ermüdung, Materialkriechverhalten, wobei ein solcher Hinweis geliefert wird mittels einer symbolischen Spannungs-Rosette und/oder einer symbolischen Spannungslehre und/oder eines Moire-Streifenmusters oder eines anderen in ähnlicher Weise optisch basierten Spannungsindikators; und
Initiieren einer Nachricht, die einen Hinweis darauf liefert, dass die Abbildungsdaten (30) inkompatibel mit dem Analyseprogramm (28) der symbolischen Datenanordnung sind, als Reaktion auf das Bestimmen, dass die Abbildungsdaten nicht kompatibel mit dem Analyseprogramm der symbolischen Datenanordnung sind, und **dadurch** Angeben von Informationen von einer oder mehreren Charakteristika der Komponente.

2. System nach Anspruch 1, wobei die mindestens eine Computervorrichtung (24) ferner konfiguriert ist, um:
nach dem Initiieren der Nachricht aktualisierte Abbildungsdaten (40) über die symbolische Datenanordnung (18) zu erhalten.

3. System nach Anspruch 2, wobei die aktualisierten Abbildungsdaten wieder erhalten werden bis die aktualisierten Abbildungsdaten kompatibel mit dem Analyseprogramm der symbolischen Datenanordnung sind.

4. System nach Anspruch 2 oder 3, wobei die mindestens eine Computervorrichtung (24) ferner konfiguriert ist, um:
die aktualisierten Abbildungsdaten über die symbolische Datenanordnung (18) auszuwerten, um zu bestimmen, ob die aktualisierten Abbildungsdaten kompatibel mit dem Analyseprogramm der symbolischen Datenanordnung sind;
die aktualisierten Abbildungsdaten unter Verwendung des Analyseprogramms (28) der symbolischen Datenanordnung als Reaktion auf das Bestimmen, dass die aktualisierten Abbildungsdaten kompatibel mit dem Analyseprogramm der symbolischen Datenanordnung sind, zu analysieren; und
eine Nachricht zu initiieren, die einen Hinweis darauf liefert, dass die aktualisierten Abbildungsdaten inkompatibel mit dem Analyseprogramm (28) der symbolischen Datenanordnung sind, als Reaktion auf das Bestimmen, dass die aktualisierten Abbildungsdaten nicht kompatibel mit dem Analyseprogramm der symbolischen Datenanordnung sind, und um dadurch Hinweise auf Informationen über ein oder mehrere Charakteristika der Komponente

5. System nach einem vorhergehenden Anspruch, wobei die Abbildungsdaten (30) Daten enthalten, die von der Endoskopsonde (22) erhalten werden, während die Endoskopsonde an einer ersten Position relativ zu der symbolischen Datenanordnung (18) orientiert ist, und wobei die aktualisierten Abbildungsdaten (40) Daten enthalten, die von der Endoskopsonde erhalten werden, während die Endoskopsonde an einer zweiten Position relativ zu der symbolischen Datenanordnung orientiert ist; wobei die zweite Position eine andere als die erste Position ist.

6. System nach einem der Ansprüche 4 und 5, wobei die mindestens eine Computervorrichtung (24) ferner konfiguriert ist, um aktualisierte Abbildungsdaten über die symbolische Datenanordnung (18) von der Endoskopsonde (22) als Reaktion auf das Bestimmen, dass die Abbildungsdaten nicht kompatibel mit dem Analyseprogramm (28) der symbolischen Datenanordnung sind, zu erhalten.

7. System nach einem vorhergehenden Anspruch, wobei die Nachricht, die einen Hinweis darauf liefert, dass die Abbildungsdaten inkompatibel mit dem Analyseprogramm der symbolischen Datenanordnung sind, ferner eine Nachricht enthalten, die einen Hinweis darauf liefert, dass die Endoskopsonde (22) von der ersten Position zu der zweiten Position erneut positioniert wird.

8. System nach einem vorhergehenden Anspruch, wobei die symbolische Datenanordnung (18) enthält: einen eindimensionalen Barcode und/oder ein zweidimensionales Symbol und/oder ein dreidimensionales komprimiertes Symbol.

9. System nach einem vorhergehenden Anspruch, wobei die Komponente (6) innerhalb der Turbomaschine (4) ein Turbomaschinenblatt (8) und/oder einen Schwalbenschwanz (10) der Turbomaschinenschaufel enthält.

10. Verfahren zum Überwachen einer Komponente (6) innerhalb einer Turbomaschine (4), wobei das Verfahren umfasst:
Positionieren (P1) einer Endoskopsonde (22) innerhalb der Turbomaschine an einer ersten Position relativ zu der Komponente und innerhalb eines Abbildungsbereichs einer symbolischen Datenanordnung;
Verwenden mindestens einer Computervorrichtung, die mit der Endoskopsonde gekoppelt ist:
Erfassen (P2) von Abbildungsdaten (30) über die symbolische Datenanordnung (18) von der Endoskopsonde;
Auswerten (P3) der Abbildungsdaten, um zu bestimmen, ob die Abbildungsdaten kompatibel mit einem Analyseprogramm der symbolischen Datenanordnung sind, das konfiguriert ist, um auf der mindestens einen Computervorrichtung (24) ausgeführt zu werden; und
Analysieren (P4) der Abbildungsdaten unter Verwendung des Analyseprogramms (28) der symbolischen Datenanordnung als Reaktion auf das Bestimmen, dass die Abbildungsdaten kompatibel mit dem Analyseprogramm der symbolischen Datenanordnung sind;
Bestimmen einer Charakteristik der symbolischen Datenanordnung (18), wobei die Charakteristik Informationen über die Komponente (6) enthält, wobei die Informationen mindestens eines von dem Folgenden umfassen: eine Angabe, die einen Hinweis gibt auf Spannung, Beanspruchung, Ermüdung, Materialkriechverhalten, wobei ein solcher Hinweis geliefert wird mittels einer symbolischen Spannungs-Rosette und/oder einer symbolischen Spannungslehre und/oder eines Moire-Streifenmusters oder eines anderen in ähnlicher Weise optisch basierten Spannungsindikators;
Initiieren einer Nachricht, die einen Hinweis darauf liefert, dass die Abbildungsdaten (30) inkompatibel mit dem Analyseprogramm (28) der symbolischen Datenanordnung sind, als Reaktion auf das Bestimmen, dass die Abbildungsdaten nicht kompatibel mit dem Analyseprogramm der symbolischen Datenanordnung sind, und dadurch Angeben von Informationen über ein oder mehrere Charakteristika der Komponente.

11. Verfahren nach Anspruch 10, das ferner umfasst:
erneutes Positionieren (P5) der Endoskopsonde innerhalb der Turbomaschine in Richtung einer zweiten Position, die eine andere als die erste Position ist, als Reaktion als Reaktion auf die Nachricht.

12. Verfahren nach Anspruch 10 oder 11, das ferner ein Verwenden der mindestens einen Computervorrichtung umfasst, um:
nach dem erneuten Positionieren aktualisierte Abbildungsdaten über die symbolische Datenanordnung von dem Endoskop zu erhalten (P6);
die aktualisierten Abbildungsdaten über die symbolische Datenanordnung auszuwerten (P7), um zu bestimmen, ob die aktualisierten Abbildungsdaten kompatibel mit dem Analyseprogramm der symbolischen Datenanordnung sind; und
die aktualisierten Abbildungsdaten unter Verwendung des Analyseprogramms der symbolischen Datenanordnung als Reaktion auf das Bestimmen, dass die aktualisierten Abbildungsdaten kompatibel mit dem Analyseprogramm der symbolischen Datenanordnung sind, zu analysieren (P8).

13. Verfahren nach Anspruch 10 oder 12, wobei die Turbomaschine ein Gehäuse enthält, und wobei das Positionieren ein Anordnen des Endoskops durch eine Öffnung in dem Gehäuse enthält.

## Revendications

1. Système comprenant :
une sonde endoscopique (22) calibrée pour passer à travers une ouverture (14) d'une turbomachine (4), la sonde endoscopique étant destinée à détecter un ensemble de données symboliques (18) sur un composant (6) à l'intérieur de la turbomachine, **caractérisé par** :
au moins un dispositif de calcul (24) couplé en service à la sonde endoscopique et configuré pour surveiller le composant (6) dans la turbomachine (4) en effectuant les actions consistant à :
obtenir des données d'image (30) sur l'ensemble de données symboliques (18) situé sur le composant dans la turbomachine (4) à partir de la sonde endoscopique ;
évaluer les données d'image (30) pour déterminer si les données d'image sont compatibles avec un programme (28) d'analyse de l'ensemble de données symboliques configuré pour être exécuté sur le au moins un dispositif de calcul (24) et
analyser les données d'image (30) en utilisant le programme (28) d'analyse de l'ensemble de données symboliques en réponse à la détermination que les donnée d'image sont compatibles avec le programme d'analyse de l'ensemble de données symboliques ;
déterminer une caractéristique de l'ensemble de données symboliques (18), laquelle caractéristique comprend les informations sur le composant (6), dans lequel les informations comprennent au moins l'une des suivantes : un indication de contrainte, d'effort, de fatigue, un fluage du matériau, au moyen d'au moins l'un ou l'autre d'une rosette de contrainte symbolique, d'une jauge de contrainte symbolique, un indicateur de motif de franges de Moiré ou un autre indicateur de contrainte à base optique de manière similaire ; et
initier un message indiquant que les données d'image (30) sont incompatibles avec le programme (28) d'analyse de l'ensemble de données symboliques en réponse à la détermination que les données d'image ne sont pas compatibles avec le programme d'analyse de l'ensemble de données symboliques, ce qui indique des informations sur une ou plusieurs caractéristiques du composant.

2. Système selon la revendication 1, dans lequel le au moins un dispositif de calcul (24) est en outre configuré pour :
obtenir des données d'image mises à jour (40) sur l'ensemble de données symboliques (18) après l'initiation du message.

3. Système selon la revendication 2, dans lequel l'image mise à jour est obtenue à nouveau jusqu'à ce que les données d'image mises à jour soient compatibles avec le programme d'analyse de l'ensemble de données symboliques.

4. Système selon l'une ou l'autre de la revendication 2 ou 3, dans lequel le au moins un dispositif de calcul (24) est en outre configuré pour :
évaluer les données d'image mises à jour sur l'ensemble des données symboliques (18) pour détermination si les données d'image mises à jour sont compatibles avec le programme d'analyse de l'ensemble de données symboliques ;
analyser les données d'image mises à jour en utilisant le programme (28) d'analyse de l'ensemble de données symboliques en réponse à la détermination que les données d'image mises à jour sont compatibles avec le programme d'analyse de l'ensemble de données symboliques ; et
initier un message indiquant que les données d'image mises à jour sont incompatibles avec le programme (28) d'analyse de l'ensemble de données symboliques en réponse à la détermination que les données d'image mises à jour ne sont pas compatibles avec le programme d'analyse de l'ensemble de données symboliques, indiquant de la sorte des informations sur une ou plusieurs caractéristiques du composant.

5. Système selon l'une quelconque des revendications précédentes, dans lequel les données d'image (30) comprennent des données obtenues auprès de l'endoscope (22) tandis que l'endoscope est orienté dans une première position par rapport à l'ensemble de données symboliques (18) et les données d'image mises à jour (40) comprennent des données obtenues auprès de l'endoscope tandis que l'endoscope est orienté dans une seconde position par rapport à l'ensemble de données symboliques, la seconde position étant distincte de la première position.

6. Système selon l'une quelconque des revendications 4 et 5, dans lequel le au moins un dispositif de calcul (24) est en outre configuré pour obtenir des données d'image mises à jour sur l'ensemble de données symboliques (18) venant de l'endoscope (22) en réponse à la détermination que les données d'image ne sont pas compatibles avec le programme (28) d'analyse de l'ensemble de données symboliques.

7. Système selon l'une quelconque des revendications précédentes, dans lequel le message indiquant que les données d'image sont incompatibles avec le programme d'analyse de l'ensemble de données symboliques comprend en outre un message indiquant que l'endoscope (22) doit être repositionné de la première position à la seconde position.

8. Système selon l'une quelconque des revendications précédentes, dans lequel l'ensemble de données symboliques (18) comprennent au moins l'un des suivants : un code à barres unidimensionnel, un symbole bidimensionnel ou un symbole tridimensionnel comprimé.

9. Système selon l'une quelconque des revendications précédentes, dans lequel le composant (6) dans la turbomachine (4) comprend au moins l'un ou l'autre d'une aube de turbomachine (8) ou d'une queue d'aronde d'auget de turbomachine (10).

10. Procédé de surveillance d'un composant (6) dans une turbomachine (4), le procédé comprenant les étapes consistant à :
positionner (P1) une sonde endoscopique (22) à l'intérieur de la turbomachine dans une première position par rapport au composant et dans la plage d'imagerie d'un ensemble de données symboliques ;
en utilisant au moins un dispositif de calcul couplé à la sonde endoscopique :
capturer (P2) des données d'image (30) à partir de l'endoscope sur l'ensemble de données symboliques (18) ;
évaluer (P3) les données d'image pour déterminer si les données d'image sont compatibles avec un programme d'analyse de l'ensemble de données symboliques configuré pour être exécuté sur le au moins un dispositif de calcul (24) ; et
analyser (P4) les données d'image en utilisant le programme (28) d'analyse de l'ensemble de données symboliques en réponse à la détermination que les données d'image sont compatibles avec le programme d'analyse de l'ensemble de données symboliques ;
déterminer une caractéristique de l'ensemble de données symboliques (18), laquelle caractéristique comprend des informations sur le composant (6), dans lequel les informations comprennent au moins l'une des suivantes :
une indication de contrainte, d'effort, de fatigue, un fluage du matériau, au moyen d'au moins une rosette de contrainte symbolique, une jauge de contrainte symbolique, un indicateur de motif de franges de Moiré ou un autre indicateur de contrainte à base optique de manière similaire ;
initier un message indiquant que les données d'image (30) sont incompatibles avec le programme (28) d'analyse de l'ensemble de données symboliques en réponse à la détermination que les données d'image ne sont pas compatibles avec le programme d'analyse de l'ensemble de données symboliques, indiquant de la sorte des informations sur une ou plusieurs caractéristiques du composant.

11. Procédé selon la revendication 10, comprenant en outre :
le repositionnement (P5) de la sonde endoscopique à l'intérieur de la turbomachine dans une seconde position distincte de la première position en réponse au message.

12. Procédé selon la revendication 10 ou la revendication 11, comprenant en outre l'utilisation du au moins un dispositif de calcul pour :
obtenir (P6) des données d'image mises à jour sur l'ensemble de données symboliques provenant de l'endoscope après le repositionnement ;
évaluer (P7) les données d'image mises à jour sur l'ensemble de données symboliques pour déterminer si les données d'image mises à jour sont compatibles avec le programme d'analyse de l'ensemble de données symboliques ; et
analyser (P8) les données d'image mises à jour en utilisant le programme d'analyse de l'ensemble de données symboliques en réponse à la détermination que les données d'image mises à jour sont compatibles avec le programme d'analyse de l'ensemble de données symboliques.

13. Procédé selon les revendications 10 à 12, dans lequel la turbomachine comprend un carter et dans lequel le positionnement comprend le placement de la sonde endoscopique à travers une ouverture du carter.
